# EUROPEAN PATENT SPECIFICATION

(11) **EP 2 262 955 B1**
(45) Date of publication and mention of the grant of the patent: **02.01.2019**
(21) Application number: 08744856.9
(22) Date of filing: 01.04.2008
(51) Int. Cl.: E01H 1/08, A47L 11/24, B01D 46/24

(54) **MOBILE SURFACE MAINTENANCE MACHINE**
FAHRBARE BODENREINIGUNGSMASCHINE
MACHINE MOBILE D'ENTRETIEN DE SOLS

(30) Priority: 06.03.2008 US 43945; 06.03.2008 US 43932
(43) Date of publication of application: 22.12.2010
(73) Proprietor: Tennant Company, Minneapolis, MN 55440 (US)
(72) Inventor: ADELMAN, Kurt, Clarence, Sauk Rapids, MN 56379-9782 (US); WELLENS, Richard, William, Minneapolis, MN 55447-3010 (US); BASHAM, Michael, Thomas, Osseo, MN 55369-2856 (US); HANSEN, Karl, Cottage Grove, MN 55016-2776 (US)
(74) Representative: Spencer, Michael David
(86) International application number: PCT/US2008/059018
(87) International publication number: WO 2009/110916

(56) References cited:
- EP-A2- 0 135 787
- US-A- 3 780 502
- US-A- 3 837 029
- US-A- 4 819 676
- US-A- 5 013 333
- US-A- 5 254 146
- US-A- 5 303 448
- US-A- 5 647 093
- US-A1- 2006 053 582
- US-B2- 7 334 290

## Description

### TECHNICAL FIELD

The present disclosure is directed to a mobile surface maintenance machine with a filtration system. More specifically, the filtration system is utilizing a filter chamber external to the debris hopper.

### BACKGROUND OF THE INVENTION

Over the years various kinds of machines have been developed for cleaning and maintaining floors inside buildings, and paved outdoor areas such as streets, sidewalks and parking lots. They include such machines as rotary broom sweepers, vacuum sweepers, scarifiers, burnishers, polishers and scrubbers. For our purposes here they can be divided into machines which apply water to the surface being maintained and machines which operate dry. We are concerned with the latter, which would include many vacuum sweepers, scarifiers, and rotary broom sweepers. They all share one problem which is addressed by this invention. In their normal operation they tend to stir up dust from the surface being maintained. If it is not controlled, this dust is highly objectionable.

On many of these machines the problem has received one general solution. The functional tool which generates the dust, such as a rotary broom, a scarifier head, or a vacuum pickup, is provided with a cover and surrounded by walls which have rubber skirts that hang down almost to the surface being maintained. An on board exhaust blower continuously pulls air from the tool chamber thus created so there is a sub-atmospheric air pressure within it which eliminates outflow of dusty air from under the skirts. The blower exhausts this air to atmosphere. One or more air filters are placed in this air path, either upstream or downstream from the blower, to remove dust from the air before it is released so the discharge to atmosphere will be dust free.

EP 0 135 787 A2 describes a floor maintenance machine according to the preamble of claim 1, in which a housing containing a panel filter has an inlet that mates with a hopper during use of the machine. An electrically-powered eccentric weight device vibrates the housing to shake the dust collected from the filter.

### BRIEF SUMMARY OF THE INVENTION

The present invention is directed to a mobile surface maintenance machine with a filter system, according to claim 1. Optional features of the invention are set out in the dependent claims. It should be appreciated by those skilled in the art that the conception and specific embodiment disclosed may be readily utilized as a basis for modifying or designing other structures for carrying out the same purposes of the present invention, insofar as such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:
FIGURE 1 is a perspective illustration of one embodiment of a cleaning machine utilizing a filter cleaning system in accordance with the present invention.
FIGURES 2 and 3 are perspective illustrations of the prefilter chamber and filter box of the cleaning machine of FIGURE 1.
FIGURE 4 is an enlarged portion of FIGURE 3 contained within circle C4.
FIGURE 5 is a perspective illustration of the prefilter chamber and filter box of FIGURE 1.
FIGURE 6 is an enlarged portion of FIGURE 5 contained within circle C6.
FIGURE 7 is a perspective view of a cover component of the embodiment of FIGURE 1.
FIGURE 8 is a perspective view of a housing of the embodiment of FIGURE 1.
FIGURE 9 is a perspective view of a filter and filter shaker mechanism of FIGURE 1.
FIGURE 10 is a cross sectional view of portions of FIGURE 9.
FIGURE 11 is a perspective illustration of the machine of FIGURE 1.
FIGURE 12 is a depiction of components of FIGURE 1 during operation.
FIGURES 13 and 14 are depiction of a filter box and prefilter during machine operation.
FIGURES 15 - 17 illustrate the machine 10 of FIGURE 1 with a hopper in an upright, dumping orientation.

### DETAILED DESCRIPTION OF THE INVENTION

A conventional forward throw rotary broom sweeper will be used by way of example in the following description of the invention. However, it should be understood that, as already stated, the invention could as well be applied to other types of mobile surface maintenance machines, such as, for example, other types of rotary broom sweepers, scarifiers, and various types of vacuum sweepers.

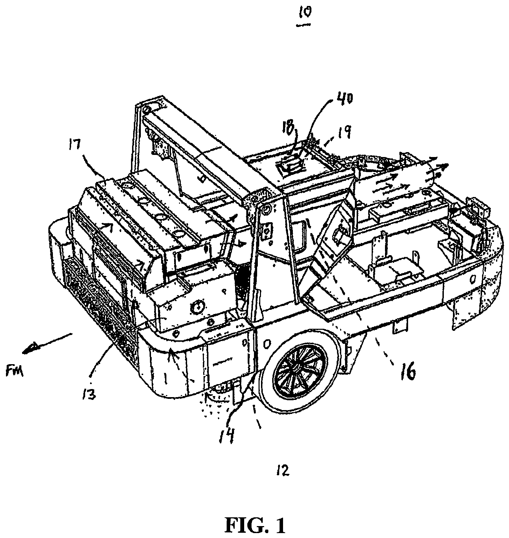

With reference to FIGURE 1, there is shown an industrial sweeping machine 10. As illustrate, machine 10 is a forward throw sweeper with an intended direction of motion indicated by arrow marked FM. Machine 10 could as well be an over-the-top, rear hopper sweeper, a type which is also well known in the art. Machine 10 has a rotating cylindrical brush 12 for sweeping debris from a floor or other surface into a debris hopper 13. Hopper arms (not shown) allow hopper 13 to be lifted during a dumping procedure. The brush chamber generally encloses brush 12 under skirts 14 to control air flow around brush 12. The skirts 14 largely contain within the brush chamber any dust stirred up by the brush 12. To complete the dust control there is a suction blower or vacuum fan 16 which exhausts air from the brush chamber to atmosphere in an airflow path shown by the arrows in FIGURE 1. Vacuum fan 16 is housed within filter box 18 and includes an impeller which is driven by the machine's hydraulic system. Vacuum fan 16 maintains a sub-atmospheric pressure within the brush chamber so that air is drawn in under the skirts rather than flowing out. Thus relatively little dust escapes from around skirts 14. During machine 10 operation, vacuum fan 16 draws debris and dust-entrained air through prefilter 17 and filter 19 contained within filter box 18 prior to exhaust. Prefilter 17 is located within debris hopper 13 and is separated from filter box 18 during, for example, a debris hopper 13 lift and dump operation. Shaker mechanism 40 is provided on filter box 18. Periodic activation of shaker mechanism shakes filter 19 to dislodge dust and debris. Various components of machine 10 have been left out of FIGURE 1, e.g., the drive engine, housings and operator station have been omitted to improve understanding of the aspects of the present invention. Additional examples of surface maintenance machine suitable for adaptation in accordance with the present invention are found in US Pat. Nos. 5,254,146 and 5,303 448.

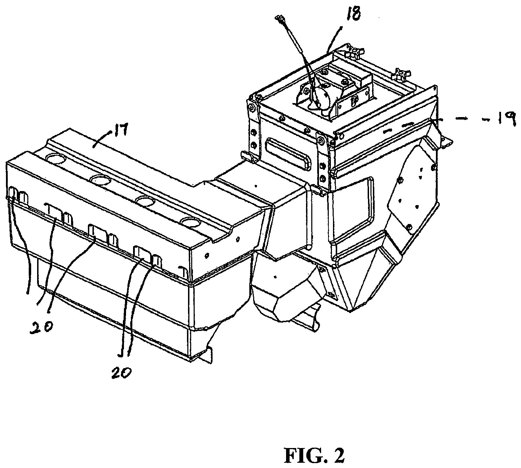

FIGURE 2 is a perspective view of prefilter 17 and filter box 18. Filter box 18 houses cylindrical filter 19 as described in more detail hereinafter. Dust and debris-laden air is drawn by vacuum action into prefilter openings 20. Together the prefilter 17 and filter box 18 remove dust and/or debris from the air stream so the vacuum fan 16 will exhaust relatively clean air to atmosphere during machine 10 operation. Prefilter 17 may comprise a bank of cyclonic filters through which dusty air passes causing separation and retention of at least some of the larger dust particles and debris. Additional features of the prefilter 17 assembly can be found by reference to U.S. Ser. No. 60/893,560, entitled "Counter Rotating Cyclonic Filter", and incorporated by reference herein.

In a preferred embodiment, filter box 18 includes a cylindrical pleated media filter 19, such as are manufactured, for example, by Donaldson Company, Inc. of Minneapolis, Minnesota. Filter 19 has a pleated media, with the pleats running parallel to the centerline of the cylinder, which makes them vertical when installed as shown. The pleated media is surrounded with a perforated metal sleeve for structural integrity. Outside the metal sleeve may be provided a fine mesh sleeve (not shown) woven from a slippery synthetic filament which stops the coarser dust and sheds it easily during a filter cleaning cycle. The ends of the cylindrical filter are open. Other filter technologies could be utilized in alternative embodiments of filter box 18.

A preferred example of the invention utilizes a cylindrical pleated media filter. However, the invention will accommodate air filters of other types. An alternative design includes two or more flat panel pleated media filters, and other known types of air filters may also be successfully employed. These might include, for example, cloth filters formed into bags, envelopes or socks, which are well known types of filters in the field of air filtration.

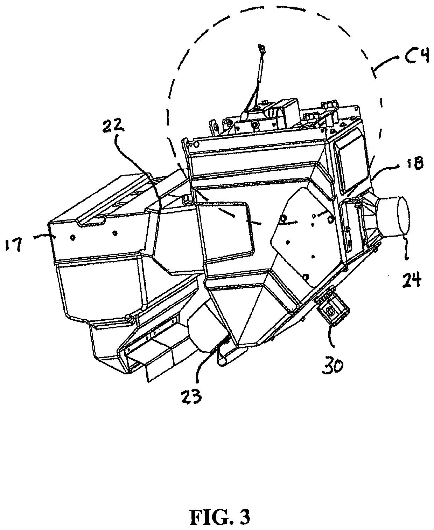

As shown in FIGURE 3, filter box 18 has an intake opening 22 at the front of the machine 10 to admit air from the prefilter assembly 17. As illustrated a flexible coupling, such as foam, is utilized to provide fluid communication between prefilter 17 and filter box 18. Dust and debris captured by filter box 18 is removable via a lower debris outlet port 23. Filter air is directed out of filter box 18 at air outlet 24. Upon deactivation of the vacuum system, an accumulation of dust and debris passes through a seal at debris outlet port 23 and into the machine hopper 13 (not shown). During machine 10 operation, the debris outlet port seal is kept closed by vacuum action. Filter box 18 includes vacuum fan motor 30 which is coupled to the vacuum impeller (not shown).

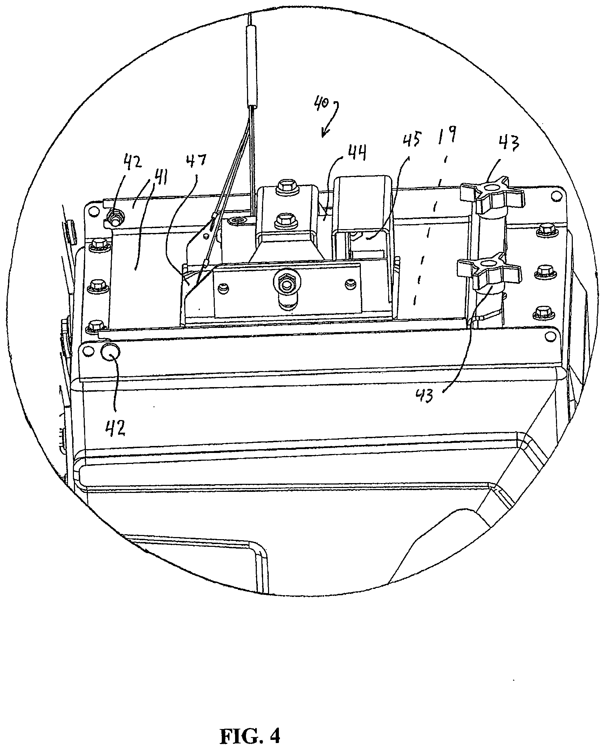

FIGURE 4 is an enlarged portion of the filter box 18 showing details of shaker mechanism 40 as indicated by circle, C4, in FIGURE 3. A hinged cover plate 41 is secured on top of filter box 18 by two hinge assemblies 42 and two clamp assemblies 43. When clamp assemblies 43 are released, cover plate 41 and connected components rotate about the hinges 42 to allow access into filter box 18. Cover plate 41 has a large generally rectangular opening in it corresponding to the general location of the cylindrical filter 19.

Shaker mechanism 40 includes an electric motor 44 coupled to an eccentric mass 45. Electric motor 44 is coupled to a shaker plate 47 which engages the top of filter 19. Shaker mechanism 40 also includes a vibration-isolating motor mount assembly which permits shaker plate 47 to vibrate generally independently relative to cover plate 41 during a filter shaking procedure.

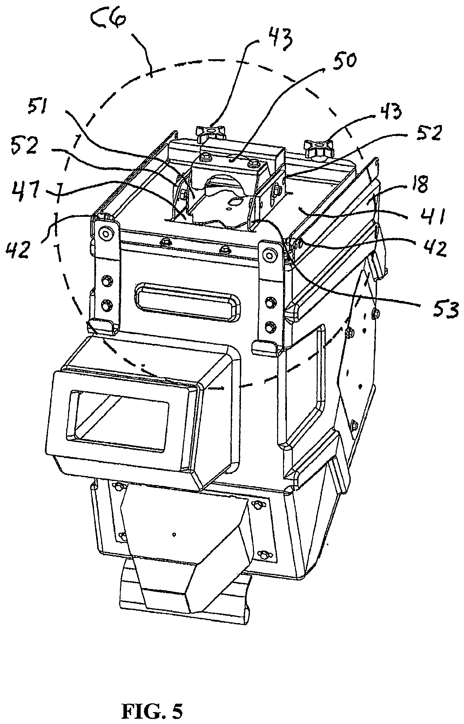

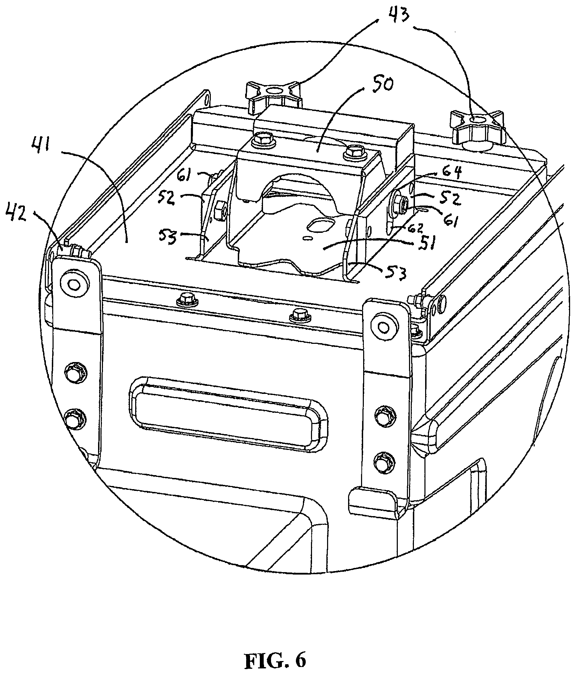

Referring to FIGURE 5, the motor mount assembly includes a motor clamp 50, motor saddle 51, and a pair of slide plates 52 secured to upwardly directed flanges 53 of hinged cover plate 41. Electric motor 44 and eccentric mass 45 have been removed in this illustration. FIGURE 6 is an enlarged portion of the filter box 18 assembly showing details of shaker mechanism 40 as indicated by circle, C6, in FIGURE 5.

Motor 44 is secured between motor clamp 50 and saddle 51. Saddle 51 is rigidly coupled to shaker plate 47. Saddle 51 is movably coupled to slide plates 52 via a pair of fasteners 61. In this example, fasteners 61 are free to move within slots 62 to permit a generally vertical displacement of the saddle 51, clamp 50, motor 44 and eccentric mass 45 during a filter shaking procedure. Washers 64 slide against slide plates 52 as limited by slots 62.

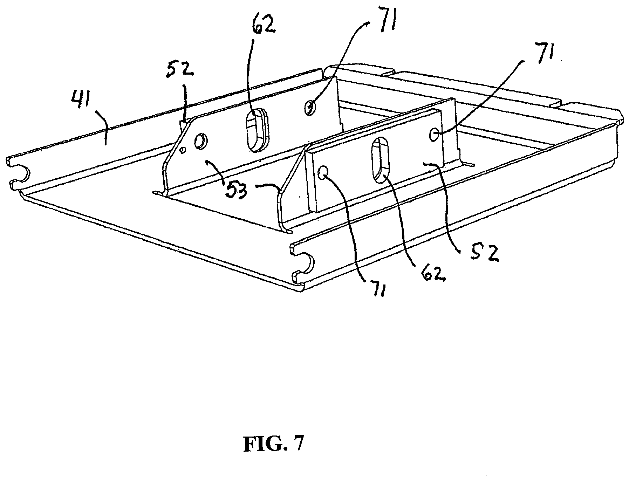

FIGURE 7 illustrates hinged filter cover plate 41 and slide plates 52. Fasteners (not shown) pass through openings 71 and secured slide plates 52 to flanges 53 of cover plate 41. Slots 62 extend through generally equally sized openings in slide plates 52 and flanges 53. In one example, slide plates 52 are of a durable material with substantially improved wear resistance relative to cover plate 41.

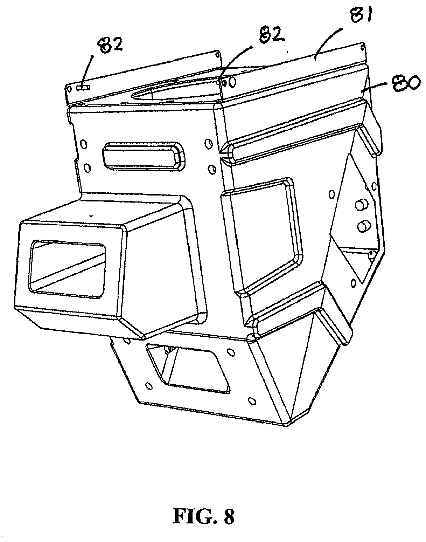

FIGURE 8 illustrates housing 80 of filter box 18 and filter box cover 81. Cover 81 is secured to housing 80 in this example via threaded fasteners. Pin-shaped components 82 are included within hinge assemblies 42 and support cover plate 41 and connected components when cover plate 41 is opened, such as during a filter exchange.

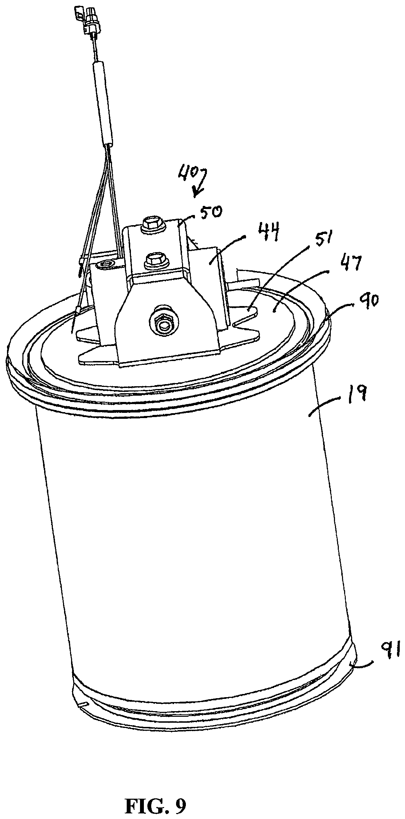

FIGURE 9 illustrates components of shaker mechanism 40 and filter 19. In this example, shaker plate 47 is in generally direct contact with one end of filter 19. The opposite end of filter 19 is supported by a base within housing 80 (not shown). Upper annular seal 90 and lower annular seal 91 control air flow through top openings of filter 19.

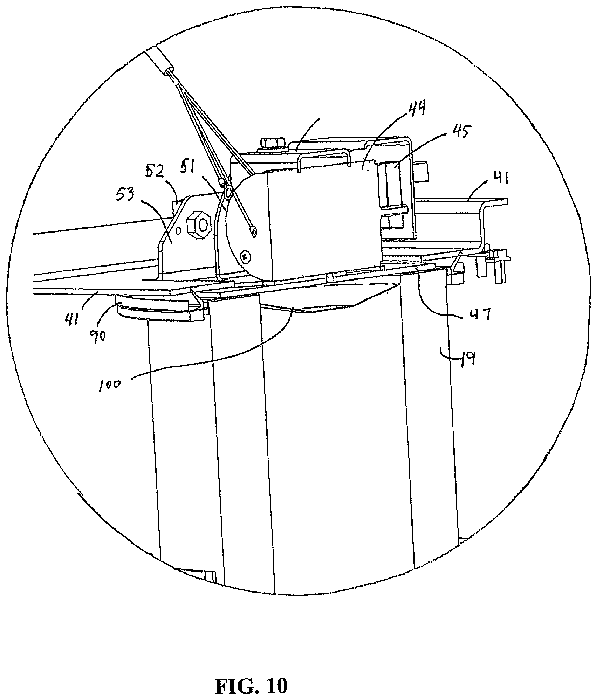

FIGURE 10 illustrates a cross sectional view of the shaker mechanism 40 and filter 19 of FIGURE 9 in an operational orientation. Top cover 100 is held between a top surface of filter 19 and is in direct contact with shaker plate 47. Upper annular seal 90 is in contact with a lower surface of hinged cover plate 41. Forces generated during rotation of motor 44 and eccentric mass 45 are directly applied to the top of filter 19 and cause filter 19 to shake and dislodge dust and debris on filter 19 surfaces.

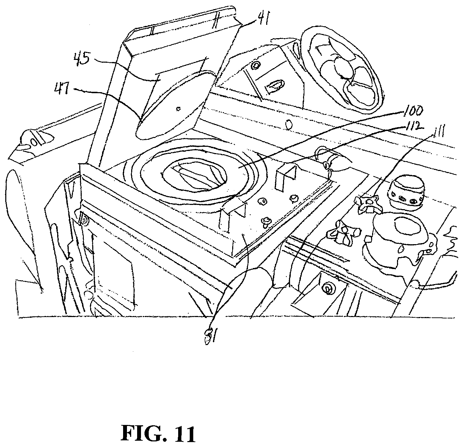

FIGURE 11 illustrates hinged cover plate 41 and connected components in an opened orientation, such as during inspection or replacement of filter 19. Clamp assemblies 43 include knobs 111 which are secured on threaded fasteners 112 held above filter box cover 81. As depicted, removal of knobs 111 from threaded fasteners 112 permits opening of cover plate 41 and access to filter 19.

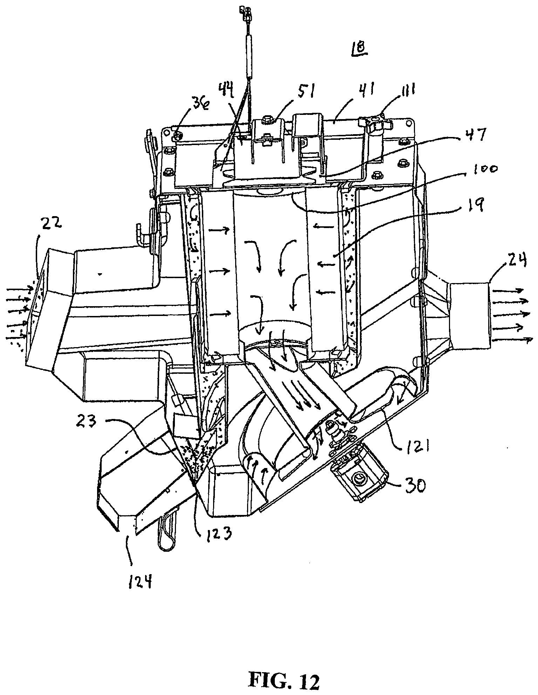

FIGURE 12 is a cross-sectional operational depiction of filter box 18 with airflows generally indicated by arrows. In operation, dusty airflow passes first through prefilter 17 and enters filter box 19 at intake opening 22. Air is drawn through filter box 18 upon activation of impeller 121 which is driven by vacuum fan motor 30 and exhausted toward the rear of the machine at air outlet 24. This is a preferred arrangement because the air is cleaned before it passes through the vacuum impeller, which reduces abrasive wear on the impeller. However, some sweepers pass the air first through the blower and then through the filters. This arrangement can also be accommodated by the invention.

During machine 10 operation, dust and debris accumulates near debris outlet 23. Seal 123 is held closed by vacuum action during machine 10 use. In the absence of impeller 121 rotation, debris forces open seal 123 and falls out of hopper box 18 through opening 124. In one example, opening 124 is located near an end of extension conduit 125 which is at least partially located within front hopper 13 of machine 10. Dust and debris falling out of filter box 18 is directed through extension 125 and drops through opening 124 onto a surface of hopper 13.

During a filter shaking procedure, the motor driven eccentric mass 45 imparts a vibratory motion to filter 19 to dislodge an accumulation of dust and debris. Various means for initiating a cleaning cycle can be envisioned. In one preferred embodiment, shaker motor 44 is activated after each time the vacuum system is turned off. In another embodiment, shaker motor 44 is controlled via a machine controller in response to differential pressure changes across filter 19. A pressure switch for sub-atmospheric pressure may also be installed at filter box 18, with one of its pressure ports connected to the duct leading to the exhaust fan and its other pressure port open to atmosphere. In normal service, as dust gradually accumulates on the filters, the differential pressure will rise. When it reaches a predetermined value the pressure switch will signal a controller to initiate an automatic filter cleaning cycle.

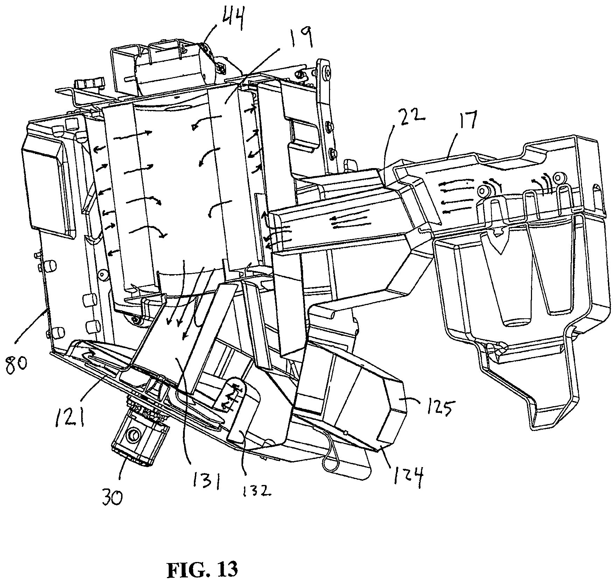

FIGURES 12 and 13 are cross-sectional operational depictions of filter box 18 and prefilter 17 showing airflows generally indicated by arrows. In operation, dusty airflow passes first through prefilter 17 and enters filter box 19 at intake opening 22. Air is drawn through filter box 18 upon activation of impeller 121 which is driven by vacuum fan motor 30 and exhausted toward the rear of the machine at air outlet 24. In addition to containing cylindrical filter 19, filter box 18 also defines a vacuum fan housing for drawing air through filter and conduit 131 and directing air out through conduit 132 which has an expanding cross section as conduit 132 travels from impeller 132 to outlet 24. In one example of the invention, filter box 18 is a rotationally molded polymer component.

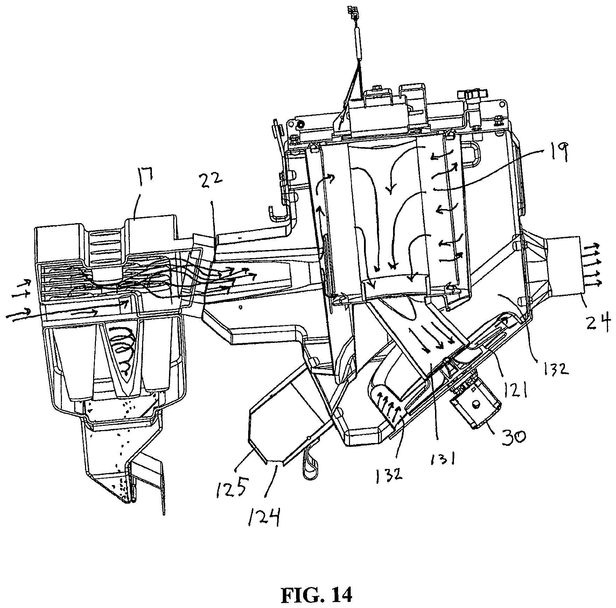

FIGURE 14 is a front perspective view prefilter 17 and filter box 18. Prefilter 17 includes a top housing and a bottom portion housing. Air inlets 20 are defined along lower surfaces of upper housing.

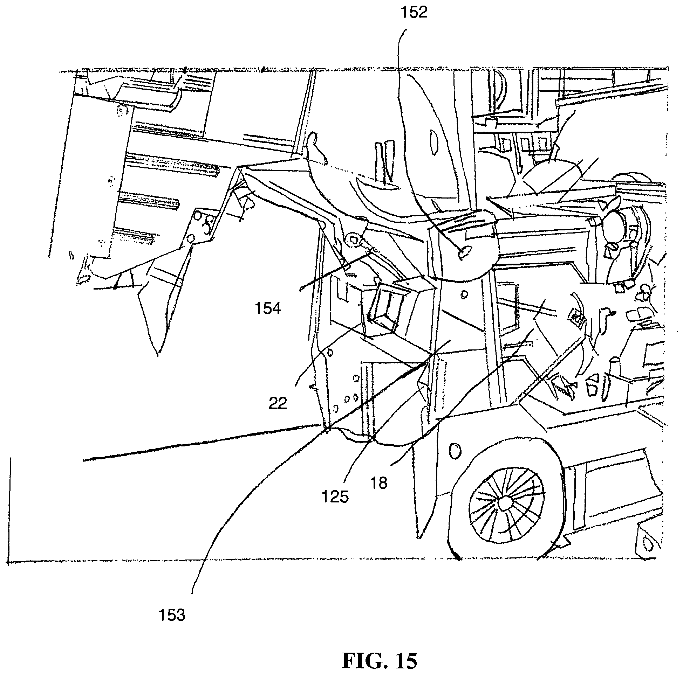

FIGURE 15 represent the assembly of FIGURE 14 with top housing removed. Seal functions as a gasket to minimize air leakage at the junction between top and bottom housing. Seal includes a plurality of openings permit air to flow between the top and bottom housings. In another example, seal may have fewer openings thereby blocking air flow through one or more cyclone filter sections. Threaded stem and nut are used to secure the top housing to the lower housing. Nuts are shown as wing-nuts, though other threaded fasteners may be utilized in another example. Nuts are accessible from above top housing of prefilter 17, thereby allowing inspection of prefilter 17 interior without removing the lower housing.

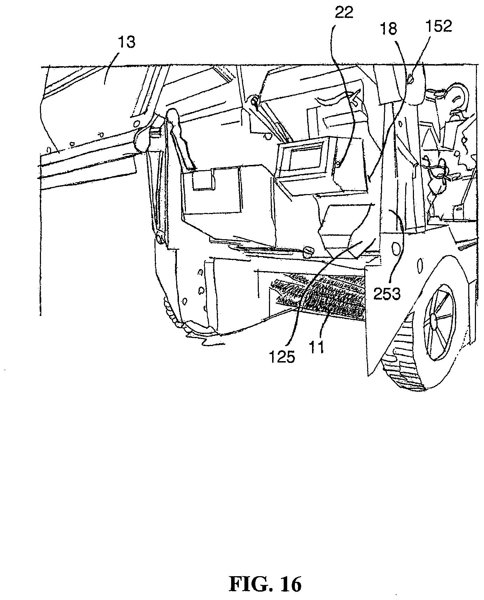

FIGURE 16 is a cross sectional view of prefilter 17. Cones form a lower portion of a cyclone filter. In the illustrated example, cones are integrally formed into lower housing. Each cone has a lower aperture through which dust passes during machine operation. Dust collects on an inner surface of lower housing until hopper 13 is cleared during a dumping procedure.

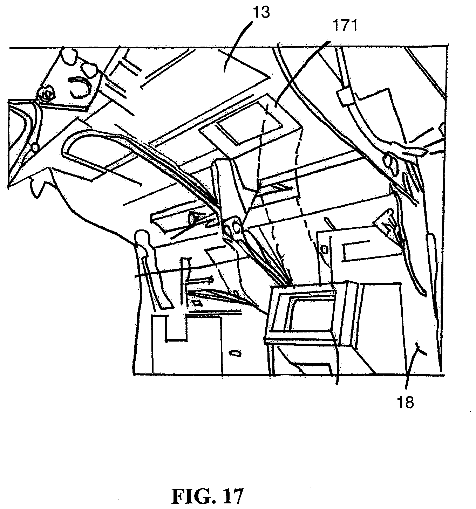

FIGURE 17 is another cross sectional view of prefilter 17 taken closer to filter box 18 relative to FIGURE 16. Lower housing also includes cavities 171 which engage a pin formation on a lower surface of top housing.

Although the present invention and its advantages have been described in detail, it should be understood that various changes, substitutions and alterations can be made herein without departing from the scope of the invention as defined by the appended claims.

## Claims

1. A mobile surface maintenance machine (10) with a filter system comprising:
a hopper (13) adapted to receive debris thrown from a sweeping brush (12);
a filter box (18) containing a air filter (19) and being externally provided relative to the hopper (13), wherein said hopper (13) is capable of being lifted away from said filter box (18) during a dumping procedure, said filter box (18) being in selective air communication with the hopper (13) so as to support a vacuum-based airflow through the hopper (13) and said air filter (19) when the hopper (13) is lowered into an operational configuration,
a vacuum impeller (121) connected to the filter box (18) draws air through the hopper (13) and the air filter (19), said filter box (18) defining air conduits for directing filtered air out of the filter box (18); and
a filter shaking mechanism (40) to dislodge dust and debris from a surface of the air filter (19), and said dust and debris accumulating on a bottom surface of the filter box (18), wherein the filter shaking mechanism (40) includes an eccentric mass (45) connected to an electric motor (44), wherein the filter box (18) includes a hinged cover plate (41) with said motor (44) being coupled to the cover plate (41), **characterised in that** it comprises a shaker plate (47) which engages a top surface of the air filter (19) and is able to impart a shaking motion thereto in order to dislodge an accumulation of dust from surfaces of the air filter (19),
wherein the shaker plate (47) supports the electric motor (44) and the eccentric mass (45).

2. A mobile surface maintenance machine (10) of claim 1, **characterised in that** dust and debris are to be selectively passed from the filter box (18) through an opening (23) for deposit onto a hopper surface, and wherein a movable flap (123), biased by operation of the vacuum impeller (121), is provided to control the flow of dust and debris through the opening and into the hopper (13).

3. A mobile surface maintenance machine (10) of claim 2, **characterised in that** the flap (123) is adapted to be drawn closed during machine operation to prevent airflow through the opening (23).

4. A mobile surface maintenance machine (10) of claim 1, comprising:
an air conduit extending between the filter box (18) and an outlet of a prefilter assembly (17) during machine operation, wherein the prefilter assembly (17) is carried by the hopper (13), so that dusty air from inside the hopper (13) can flow into said filter box (18), said conduit being broken during a hopper dumping procedure and reestablished when the hopper dumping procedure is complete.

5. A mobile surface maintenance machine (10) of claim 4, **characterised in that** an opening (22) of the filter box (18) is sealed against an exhaust opening of the prefilter assembly (17) with a flexible coupling.

6. A mobile surface maintenance machine (10) of claim 1, **characterised in that** the shaker plate (47) is coupled to the cover plate (41) via a pair of sliding connections (52) including a pair of slots (62).

7. A mobile surface maintenance machine (10) of claim 6, **characterised in that** the pair of slots (62) are defined in flanges (53) on the cover plate (41).

8. A mobile surface maintenance machine (10) of claim 1, **characterised in that** the cover plate (41) is secured to a housing (80) of the filter box (18) via a pair of hinges (42).

9. A mobile surface maintenance machine (10) of claim 8, **characterised in that** the cover plate (41) is secured to a housing (80) of the filter box (18) via a pair of clamps (43).

10. A mobile surface maintenance machine (10) of claim 8, **characterised in that** the electric motor (44) is adapted to be withdrawn from coupling with the filter (19) as said cover plate (41) is opened about said pair of hinges (42).

11. A mobile surface maintenance machine (10) of claim 1, **characterised in that** the electric motor (44) and the shaker plate (47) are adapted to pivot into contact with a top cover (100) supported by a flat end of the filter (19).

12. A mobile surface maintenance machine (10) of claim 1, **characterised in that** the air filter (19) is a cylindrical filter (19) housed within the filter box (18).

## Patentansprüche

1. Mobile Oberflächenreinigungsmaschine (10) mit einem Filtersystem, aufweisend:
einen Behälter (13) ausgestaltet, um von einer Kehrbürste (12) eingeworfenen Schmutz aufzunehmen;
eine Filterbox (18), die einen Luftfilter (19) beinhaltet und die relativ zu dem Behälter (13) extern bereitgestellt ist, wobei der Behälter (13) während einer Entladeprozedur von der Filterbox (18) weggehoben werden kann, die Filterbox (18) ist in selektiver Luftverbindung mit dem Behälter (13), um so einen vakuumbasierenden Luftfluss durch den Behälter (13) und den Luftfilter (19) zu unterhalten, wenn der Behälter (13) in eine Betriebskonfiguration herabgesenkt wird,
ein Vakuumlaufrad (121) verbunden mit der Filterbox (18) zieht Luft durch den Behälter (13) und den Luftfilter (19), die Filterbox (18) definiert Luftleitungen zum Lenken gefilterter Luft aus der Filterbox (18); und
einen Filterschüttelmechanismus (40) um Staub und Schmutz von einer Oberfläche des Luftfilters (19) zu entfernen, und der Staub und Schmutz akkumuliert an einer Bodenfläche der Filterbox (18), wobei der Filterschüttelmechanismus (40) eine exzentrische Masse (45) verbunden mit einem elektrischen Motor (44) beinhaltet, wobei die Filterbox (18) eine angelenkte Abdeckplatte (41) beinhaltet mit dem Motor (44) gekoppelt an die Abdeckplatte (41), **dadurch gekennzeichnet, dass** er eine Schüttelplatte (47) umfasst, welche mit einer Oberseite des Luftfilters (19) interagiert und dazu fähig ist, dazu eine Schüttelbewegung zu vermitteln, um eine Akkumulation von Staub von Oberflächen des Luftfilters (19) zu entfernen,
wobei die Schüttelplatte (47) den elektrischen Motor (44) und die exzentrische Masse (45) stützt.

2. Mobile Oberflächenreinigungsmaschine (10) gemäß Anspruch 1, **dadurch gekennzeichnet, dass** Staub und Schmutz selektiv von der Filterbox (18) durch eine Öffnung (23) zur Ablagerung auf einer Behälteroberfläche geführt werden, und wobei eine bewegbare Klappe (123), beeinflusst durch den Betrieb des Vakuumlaufrads (121), bereitgestellt ist, um den Fluss von Staub und Schmutz durch die Öffnung und in den Behälter (13) zu kontrollieren.

3. Mobile Oberflächenreinigungsmaschine (10) gemäß Anspruch 2, **dadurch gekennzeichnet, dass** die Klappe (123) ausgestaltet ist, während eines Maschinenbetriebs geschlossen gezogen zu werden, um Luftfluss durch die Öffnung (23) zu verhindern.

4. Mobile Oberflächenreinigungsmaschine (10) gemäß Anspruch 1, umfassend:
eine Luftleitung, die sich während des Maschinenbetriebs zwischen der Filterbox (18) und einem Auslass einer Vorfiltergruppe (17) erstreckt, wobei die Vorfiltergruppe (17) von dem Behälter (13) getragen ist, so dass staubige Luft aus einem Inneren des Behälters (13) in die Filterbox (18) fließen kann, die Leitung wird während einer Behälterentladeprozedur unterbrochen und wird wiederhergestellt, wenn die Behälterentladeprozedur abgeschlossen ist.

5. Mobile Oberflächenreinigungsmaschine (10) gemäß Anspruch 4, **dadurch gekennzeichnet, dass** eine Öffnung (22) der Filterbox (18) gegen eine Ausblasöffnung der Vorfiltergruppe (17) durch eine flexible Verbindung versiegelt ist.

6. Mobile Oberflächenreinigungsmaschine (10) gemäß Anspruch 1, **dadurch gekennzeichnet, dass** die Schüttelplatte (47) mit der Abdeckplatte (41) über ein Paar Schiebeverbindungen (52) mit einem Paar Schlitze (62) gekoppelt ist.

7. Mobile Oberflächenreinigungsmaschine (10) gemäß Anspruch 6, **dadurch gekennzeichnet, dass** das Paar Schlitze (62) durch Flansche (53) auf der Abdeckplatte (41) festgelegt ist.

8. Mobile Oberflächenreinigungsmaschine (10), gemäß Anspruch 1, **dadurch gekennzeichnet, dass** die Abdeckplatte (41) an einem Gehäuse (80) der Filterbox (18) über ein Paar Scharniere (42) gesichert ist.

9. Mobile Oberflächenreinigungsmaschine (10) gemäß Anspruch 8, **dadurch gekennzeichnet, dass** die Abdeckplatte (41) an einem Gehäuse (80) der Filterbox (18) über ein Paar Klammern (43) gesichert ist.

10. Mobile Oberflächenreinigungsmaschine (10) gemäß Anspruch 8, **dadurch gekennzeichnet, dass** der elektrische Motor (44) ausgestaltet ist sich von der Verbindung mit dem Filter (19) zurückzuziehen, wenn die Abdeckplatte (41) mittels des Paars Scharniere (42) geöffnet wird.

11. Mobile Oberflächenreinigungsmaschine (10) gemäß Anspruch 1, **dadurch gekennzeichnet, dass** der elektrische Motor (44) und die Schüttelplatte (47) ausgestaltet sind, mit einer oberen Abdeckung (100) in Kontakt zu schwenken, unterstützt durch ein flaches Ende des Filters (19).

12. Mobile Oberflächenreinigungsmaschine (10) gemäß Anspruch 1, **dadurch gekennzeichnet, dass** der Luftfilter (19) ein zylindrischer Filter (19) ist, befindlich innerhalb der Filterbox (18).

## Revendications

1. Une machine mobile d'entretien de surfaces (10) avec un système de filtre comprenant :
une trémie (13) adaptée pour recevoir des déchets éjectés d'une brosse de balayage (12) ;
un caisson-filtre (18) contenant un filtre à air (19) et venant de l'extérieur par rapport à la trémie (13), dans lequel ladite trémie (13) peut être soulevée dudit caisson-filtre (18) pendant une opération de déversement, ledit caisson-filtre (18) étant en communication d'air sélective avec la trémie (13) pour permettre le passage du vide à travers la trémie (13) et ledit filtre à air (19) quand la trémie (13) est abaissée en configuration opérationnelle,
une pompe d'aspiration (121) connectée au caisson-filtre (18) extrait l'air à travers la trémie (13) et le filtre à air (19), ledit caisson-filtre (18) définissant les conduits d'air pour diriger l'air filtré du caisson-filtre (18) ; et
un mécanisme de secouage du filtre (40) pour déloger la poussière et les déchets de la surface du filtre à air (19), et lesdits poussière et déchets s'accumulant sur une surface inférieure du caisson-filtre (18), dans lequel le mécanisme de secouage du filtre (40) comporte une masse excentrée (45) connectée à un moteur électrique (44), dans lequel le caisson-filtre (18) comporte une plaque de recouvrement articulée (41) avec ledit moteur (44) couplé à la plaque de recouvrement (41), **caractérisé en ce que** cela comprend une plaque d'agitateur (47) qui engage une surface supérieure du filtre à air (19) et est capable d'y conférer un mouvement de secouage pour déloger l'accumulation de poussière des surfaces du filtre à air (19),
dans laquelle la plaque d'agitateur (47) supporte le moteur électrique (44) et la masse excentrée (45).

2. Une machine mobile d'entretien de surfaces (10) selon la revendication 1, **caractérisée en ce que** la poussière et les déchets sont sélectivement passés du caisson-filtre (18) à travers une ouverture (23) pour être déposés sur une surface de trémie, et dans laquelle un clapet mobile (123), dévié par l'opération de la pompe d'aspiration (121), est prévu pour contrôler le flux de poussière et de déchets à travers l'ouverture et dans la trémie (13).

3. Une machine mobile d'entretien de surfaces (10) selon la revendication 2, **caractérisée en ce que** le clapet (123) est adapté pour être fermé pendant le fonctionnement de la machine pour empêcher un flux d'air à travers l'ouverture (23).

4. Une machine mobile d'entretien de surfaces (10) selon la revendication 1, comprenant :
un conduit d'air s'étendant entre le caisson-filtre (18) et une sortie d'un ensemble préfiltre (17) pendant le fonctionnement de la machine, dans lequel l'ensemble préfiltre (17) est porté par la trémie (13), de telle sorte que l'air poussiéreux de l'intérieur de la trémie (13) puisse circuler dans ledit caisson-filtre (18), ledit conduit étant rompu pendant une opération de déversement de la trémie et rétabli lorsque l'opération de déversement de la trémie est terminée.

5. Une machine mobile d'entretien de surfaces (10) selon la revendication 4, **caractérisée en ce qu'**une ouverture (22) du caisson-filtre (18) est scellée contre une ouverture d'évacuation de l'ensemble préfiltre (17) avec un raccord flexible.

6. Une machine mobile d'entretien de surfaces (10) selon la revendication 1, **caractérisée en ce que** la plaque d'agitateur (47) est couplée à la plaque de recouvrement (41) via une paire de raccords coulissants (52) comportant une paire d'encoches (62).

7. Une machine mobile d'entretien de surfaces (10) selon la revendication 6, **caractérisée en ce que** la paire d'encoches (62) se trouve dans des rebords (53) sur la plaque de recouvrement (41).

8. Une machine mobile d'entretien de surfaces (10) selon la revendication 1, **caractérisée en ce que** la plaque de recouvrement (41) est fixée à un boitier (80) du caisson-filtre (18) via une paire de charnières (42).

9. Une machine mobile d'entretien de surfaces (10) selon la revendication 8, **caractérisée en ce que** la plaque de recouvrement (41) est fixée à un boitier (80) du caisson-filtre (18) via une paire d'attaches (43).

10. Une machine mobile d'entretien de surfaces (10) selon la revendication 8, **caractérisée en ce que** le moteur électrique (44) est prévu pour être retiré de son couplage avec le filtre (19) comme ladite plaque de recouvrement (41) est ouverte autour de ladite paire de charnières (42).

11. Une machine mobile d'entretien de surfaces (10) selon la revendication 1, **caractérisée en ce que** le moteur électrique (44) et la plaque d'agitateur (47) sont prévues pour pivoter en contact avec un capot supérieur (100) supporté par un bout plat du filtre (19).

12. Une machine mobile d'entretien de surfaces (10) selon la revendication 1, **caractérisée en ce que** le filtre à air (19) est un filtre cylindrique (19) logé dans le caisson-filtre (18).
